# EUROPÄISCHE PATENTSCHRIFT

(11) **EP 2 325 124 B1**
(45) Veröffentlichungstag und Bekanntmachung des Hinweises auf die Patenterteilung: **03.04.2013**
(21) Anmeldenummer: 10191197.2
(22) Anmeldetag: 15.11.2010
(51) Int. Cl.: B65H 75/44, H02G 11/02, H04R 1/10, B65H 75/48

(54) **Kabelaufrollvorrichtung für zwei elektrisch miteinander verbundene Kabelenden**
Cable rolling device for two cable ends with an electric connection
Dispositif d'enroulement de câble pour deux extrémités de câbles reliées électriquement

(30) Priorität: 18.11.2009 DE 102009054413
(43) Veröffentlichungstag der Anmeldung: 25.05.2011
(73) Patentinhaber: Bont, Harald, 65119 Hofheim / Taunus (DE)
(72) Erfinder: Kitzenmaier, Peter, 14469 Potsdam (DE); Bont, Harald, 65119 Hofheim / Taunus (DE)
(74) Vertreter: Farago, Peter Andreas

(56) Entgegenhaltungen:
- DE-U1-202005 008 084
- GB-A- 2 280 168
- US-A1- 2002 023 814
- US-A1- 2005 194 486
- US-A1- 2006 186 248
- US-A1- 2007 119 999
- US-B1- 6 803 525

## Beschreibung

Die vorliegende Erfindung betrifft eine Kabelaufrollvorrichtung, insbesondere eine Kabelaufrollvorrichtung für eine Ohrhörerkabelverbindung, wobei aus der Kabelaufrollvorrichtung sowohl das Kabelende mit den Ohrhörern als auch das andere Kabelende mit einem Klinkenstecker unabhängig voneinander abgerollt bzw. herausgezogen und wieder aufgerollt bzw. eingezogen werden können und elektrisch in Verbindung stehen. Die Ohrhörer auf der einen Seite und der elektrische Kontaktstecker auf der anderen Seite können jeweils beliebig bis zu einem maximalen Endausziehpunkt aus einem Gehäuse ausgezogen und auf Knopfdruck wieder in die Kabelaufrollvorrichtung als ein schützendes Gehäuse eingezogen werden.

### Stand der Technik

Bei vielen bekannten Kabelaufrollvorrichtungen können die Ohrhörer und der Kontaktstecker, der meist als Klinkenstecker ausgelegt ist, nicht in ein schützendes, vor allem die Ohrhörer umgebendes Gehäuse auf Knopfdruck automatisch eingezogen werden. Entweder müssen, wie in GB 2 342 085 A gezeigt, die Kabelenden manuell aufgewickelt werden oder es ist nur die Kabelseite der Ohrhörer in einem Gehäuse einziehbar und das, ohne dass die Ohrhörer ganz und schützend in ein Gehäuse eingezogen werden.

DE 37 08 353 C1 zeigt eine Ausführung, bei der der Klinkenstecker direkt am Gehäuse angeordnet ist und somit in Verbindung mit einem portablen Musikabspielgerät, beispielsweise einem MP3-Player, für einen Träger eine eher unpraktikable Anordnung bildet.

DE 33 36 663 A1 und DE 44 34 173 A1 zeigen beispielsweise Ausführungen von Kabelaufrollvorrichtungen, bei denen ein Ende eines Kabels durch eine Kabeltrommel, die durch eine Federvorspannung angetrieben ist, per Knopfdruck aufgerollt werden kann; jedoch ist hierbei das andere Kabelende mit dem Kontaktstecker nicht aus- bzw. durch Federkraft wieder einziehbar. Aus diesen beiden Kabelaufrollvorrichtungen ragt jeweils stets ein konstant langes Stück Kabel mit angebrachtem Klinkenstecker heraus, so dass sie jeweils meist nahe zum Musikabspielgerät positioniert werden muss und in der Anwendung beim Tragen des gesamten Systems als störend empfunden werden kann.

WO 2005/048649A1 zeigt eine Anordnung einer Kabelaufrollvorrichtung, die beide Seiten eines Ohrhörerkabels, sowohl die Seite mit den Ohrhörern, als auch die Seite mit dem Klinkenstecker aus- und einziehbar gestaltet aufweist. Jedoch geschieht das Ab- bzw. Aufrollen der Kabelenden abhängig voneinander, da beide um die gleiche Kabeltrommel gewickelt sind. Ein vom anderen Kabelende unabhängiges Ausziehen eines Kabelendes ist nicht möglich. So befindet sich die Kabelaufrollvorrichtung stets in einer vorgegebenen Position zwischen Ohrhörern und dem Klinkenstecker, was für den Anwender der Anordnung unangenehm sein kann.

GB 2 280 168 A zeigt eine Kabelaufrollvorrichtung, bei der eine von zwei Kabeltrommeln eine Spiralfeder zum Zurückdrehen, einen Arretiermechanismus und einen Entriegelungsmechanismus besitzt, während die andere Kabeltrommel manuell zurückdrehbar ist.

GB 2 337 248 A zeigt eine Kabelaufrollvorrichtung mit Fächern zur Aufnahme von Ohrhörern und eines Klinkensteckers bei voll aufgerollten Kabeln.

US 7 328 868 B2 zeigt eine Kabelaufrollvorrichtung mit zwei Kabeltrommeln, die jeweils durch eine Spiralfeder vorgespannt sind und jeweils einen automatischen Arretier- bzw. Entriegelungsmechanismus aufweisen. Zusätzlich ist je eine manuell zu betätigende Kabelarretierung für jedes Kabel vorgesehen.

US 2002/0023814 A1 zeigt eine Kabelaufrollvorrichtung mit den Merkmalen des Oberbegriffs von Anspruch 1, wobei die erste und die zweite Kabeltrommel ein gemeinsames Mittel - eine einzige Spiralfeder - zum rotatorischen Zurückdrehen in die Ausgangslage sowie jeweils einen eigenen, von dem anderen unabhängigen Entriegelungsmechanismus besitzen.

Die Aufgabe der Erfindung besteht in der Bereitstellung einer Vorrichtung zum Ab- und Aufrollen von Kabeln, insbesondere einer Kabelaufrollvorrichtung für eine Ohrhörerkabelverbindung, die einerseits ein unabhängiges Abrollen der Kabel an den beiden Enden der Vorrichtung und andererseits ein besonders einfaches und schnelles Einrollen der Kabelenden ermöglicht.

### Offenbarung der Erfindung

Die vorstehende Aufgabe wird bei einer gattungsgemäßen Vorrichtung zum Ab-und Aufrollen von Kabeln dadurch gelöst, dass der Entriegelungsmechanismus dafür eingerichtet ist, beide Arretiermechanismen gemeinsam - entweder gleichzeitig oder zeitversetzt - zu lösen. Weitere vorteilhafte Ausbildungen der Erfindung sind in den abhängigen Ansprüchen angegeben.

Erfindungsgemäß wird eine Kabelaufrollvorrichtung und insbesondere eine Kabelaufrollvorrichtung für Ohrhörerkabel zur Verfügung gestellt, bei der beide Kabelenden unabhängig voneinander, einerseits das Kabelende mit den Ohrhörern und andererseits das Kabelende mit dem Klinkenstecker, beliebig bis zu der jeweiligen Kabellänge ausgezogen werden können. Damit kann die Kabelaufrollvorrichtung beliebig in den Grenzen der maximalen Kabellänge entlang des Kabels hin- und hergeschoben werden, so dass sie der Anwender an eine für ihn angenehme Position schieben kann. Beispielsweise bei einem in der Hosentasche sich befindlichen Musikabspielgerät kann es für den Anwender eher angenehm sein, die Kabelaufrollvorrichtung über der Brust zu positionieren, so dass sie nicht in der Hosentasche zusätzlich stört. Sollen die Ohrhörer an einen PC angeschlossen werden, ist es vielleicht eher praktisch die Kabelaufrollvorrichtung nahe an den PC zu schieben. Bei Nichtgebrauch können die Ohrhörer und der Klinkenstecker in dafür vorgesehene Hohlräume in der Kabelaufrollvorrichtung eingezogen werden, damit sich die Kabel bei einem Transport nicht verheddern.

Das besondere Merkmal der Erfindung ist die Möglichkeit, zwei elektrisch miteinander in Verbindung stehende Kabelenden einerseits mechanisch unabhängig voneinander aus einer Kabelaufrollvorrichtung auszuziehen und andererseits gemeinsam durch einfaches Drücken eines Entriegelungsmechanismus einziehen lassen zu können.

### Kurzbeschreibung der Zeichnungen

- Fig. 1: zeigt eine Kabelaufrollvorrichtung mit lang ausgezogenem Ohrhörerkabel und kurz ausgezogenem Klinkensteckerkabel;
- Fig. 1 B: zeigt eine Kabelaufrollvorrichtung mit kurz ausgezogenem Ohrhörerkabel und lang ausgezogenem Klinkensteckerkabel;
- Fig. 1C: zeigt eine Kabelaufrollvorrichtung mit etwas ausgezogenem Ohrhörerkabel

- Fig. 1D: und etwas ausgezogenem Klinkensteckerkabel; zeigt eine Kabelaufrollvorrichtung mit eingefahrenem Ohrhörer- und Klinkensteckerkabel in seitlicher Ansicht von der Seite der Ohrhörer aus;
- Fig. 1E: zeigt eine Kabelaufrollvorrichtung mit eingefahrenem Ohrhörer- und Klinkensteckerkabel in der Ansicht von oben;
- Fig. 1F: zeigt eine Kabelaufrollvorrichtung mit eingefahrenem Ohrhörer- und Klinkensteckerkabel in seitlicher Ansicht von der Seite des Klinkensteckers aus;
- Fig. 2: zeigt eine Explosionsdarstellung der Kabelaufrollvorrichtung bestehend aus einem Kabelaufrollmechanismus und einem ersten und einem zweiten, umgebenden Gehäuseteil;
- Fig. 3: zeigt eine Explosionsdarstellung des Kabelaufrollmechanismus, bestehend aus Kabelspulen, Kontaktleiterplatten und umgebenden Gehäuse- und Verbindungsteilen;
- Fig. 4: zeigt eine erste Kabeltrommel mit ihrer Antriebsfeder;
- Fig. 5: zeigt ein erstes Gehäuseteil mit Arretiervorrichtung des Aufrollmechanismus mit darunter liegender, strichliert gezeichneter Kabeltrommel;
- Fig. 6A: zeigt den Kabelaufrollmechanismus von der Seite mit aufgeschnittenem Gehäuse, seinen Kabeltrommeln und mit explosionsartig abgehobenem Entriegelungsrad;
- Fig. 6B: zeigt einen ersten und zweiten Entriegelungshebel in miteinander verbundenem Zustand;
- Fig. 6C: zeigt als Schnittbild die Kabeltrommeln, die durch das Kabeltrommelverbindungselement zusammengehalten werden und zeigt explosionsartig die einführbaren Entriegelungshebel.

### Detaillierte Beschreibung eines Ausführungsbeispiels

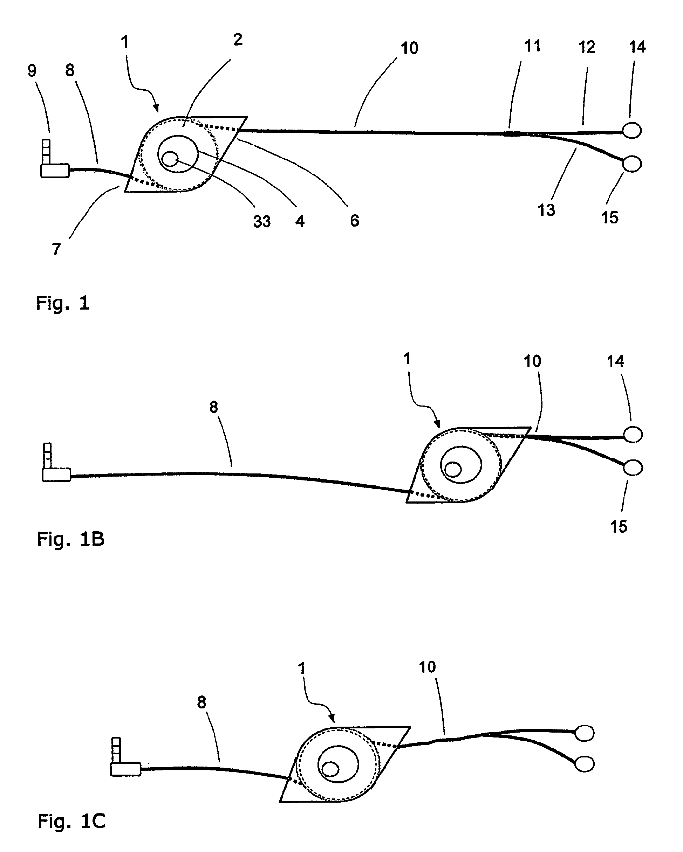

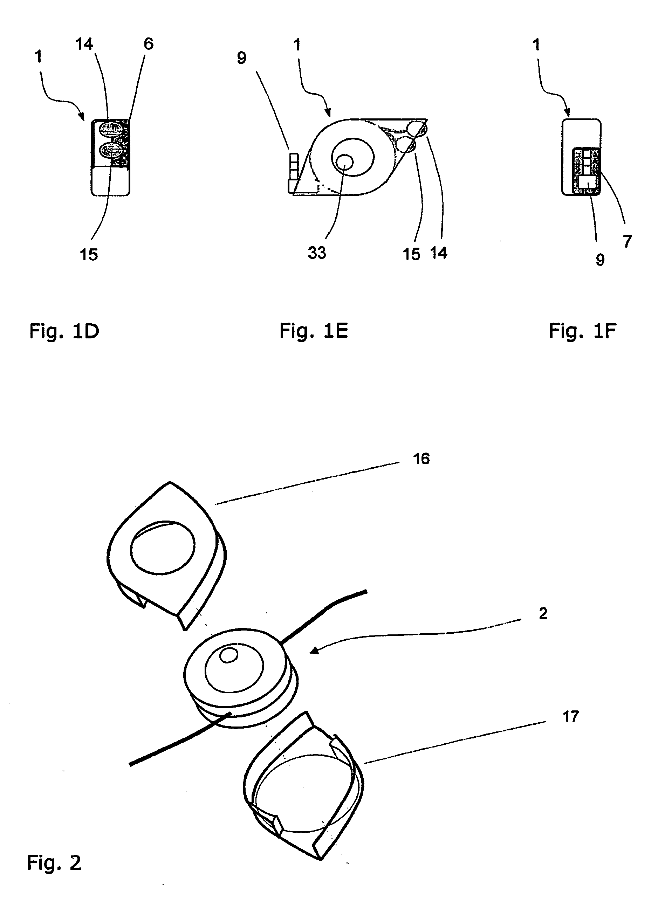

In den Fig. 1 - Fig. 1 F ist ein Ausführungsbeispiel einer erfindungsgemäßen Kabelaufrollvorrichtung in verschiedenen Kabelaufrollzuständen dargestellt.

Fig. 1 zeigt eine Kabelaufrollvorrichtung 1, insbesondere eine Kabelaufrollvorrichtung 1 in der Anwendung für ein Stereo-Ohrhörerkabel. Die Ohrhörer 14 und 15 sind jeweils über ein Mono-Kabel 12 und 13 über eine Verbindung 11 mit einem ersten Stereo-Kabel 10 verbunden, das über eine Kabelaufrollvorrichtung 1 mechanisch und elektrisch mit einem zweiten Stereo-Kabel 8 und schließlich mit einem Klinkenstecker 9 verbunden ist. Die Stereo-Kabel 8 und 10 können entgegen einer Aufrollfederkraft der Kabelaufrollvorrichtung 1 beliebig bis zu einer maximalen Länge aus der Kabelaufrollvorrichtung 1 herausgezogen werden. Ein in der Kabelaufrollvorrichtung 1 enthaltener innerer Kabelaufrollmechanismus 2 beinhaltet jeweils für eine erste Kabeltrommel 50 des ersten Stereo-Kabels 8 und für eine zweite Kabeltrommel 80 des zweiten Stereo-Kabels 10 eine Antriebsfeder, die beim Ausziehen des jeweiligen Stereo-Kabels 8 oder 10 gespannt wird und eine rücktreibende Kraft zum Wiederaufwickeln des Kabels erzeugt. Ein Arretiermechanismus verhindert das sofortige Wiedereinziehen des jeweiligen herausgezogenen Kabels. Die Betätigung eines Entriegelungsrads 4 über eine Drehhilfe 33 löst den Arretiermechanismus beider Kabeltrommeln 50 und 80, so dass dann ein Einziehen beider Enden der Stereo-Kabel 8, 10 in die Kabelaufrollvorrichtung 1 stattfindet. Wird bei Betätigung des Entriegelungsrads 4 eines der Stereo-Kabel 8 oder 10 manuell festgehalten, so wird nur das andere Stereo-Kabel eingezogen. Erfindungsgemäß ist es jedoch denkbar, zwei separate Entriegelungsräder für die jeweiligen Stereo-Kabel 8 und 10 bereitzustellen. Je nach Anwendung beziehungsweise einer vom Anwender gewünschten Lage der Kabelaufrollvorrichtung 1 zwischen einem nicht gezeigten Musikabspielgerät bzw. Klinkenstecker 9 und den Ohrhörern 14, 15 wird die eine und die andere Seite der Stereo-Kabel 8 und 10 unabhängig voneinander und mehr oder weniger aus der Kabelaufrollvorrichtung 1 herausgezogen.

In Fig. 1 ist das zweite Stereo-Kabel 10 mit Ohrhörern 14, 15 weit und das erste Stereo-Kabel 8 mit Klinkenstecker 9 nur wenig herausgezogen dargestellt. Die Kabelaufrollvorrichtung 1 würde sich demgemäß nahe am Musikabspielgerät und weit entfernt von den Ohrhörern 14, 15 befinden.

In Fig. 1B sind dahingegen das Stereo-Kabel 8 mit Klinkenstecker 9 weit aus der Kabelaufrollvorrichtung 1 herausgezogen und die Ohrhörer 14, 15 nur etwas herausgezogen dargestellt. In der praktischen Anwendung wäre die Kabelaufrollvorrichtung 1 hierbei auf der Brust des Anwenders positioniert und der Klinkenstecker 9 mit Musikabspielgerät wäre weiter entfernt davon.

Fig. 1C zeigt eine Anwendung, in der beide Seiten der Stereo-Kabel 8 und 10 mit dem jeweiligen Klinkenstecker 9 bzw. den Ohrhörern 14, 15 nur mittellang herausgezogen sind. Das Musikabspielgerät würde sich hierbei nahe bei den Ohren des Anwenders befinden.
Fig. 1D zeigt eine Seitenansicht der Kabelaufrollvorrichtung 1 mit ganz in das Gehäuse bzw. in einen ersten Aufnahmeschacht 6 eingezogenen Ohrhörern 14, 15. Der rückseitige, hier nicht zu sehende, Klinkenstecker 9 ist ebenso ganz eingezogen, und zwar in einem zweiten Aufnahmeschacht 7, der in Fig. F zu sehen ist. Dies ist der typische Transportzustand bei Nichtgebrauch der Stereo-Ohrhörer in einer Tasche, so dass sich beispielsweise die Enden der Stereo-Kabel 8 und 10 dabei nicht verheddern können. Sowohl die Ohrhörer 14, 15 sind in dem ersten Aufnahmeschacht 6, als auch der Klinkenstecker 9 in dem zweiten Aufnahmeschacht 7 geschützt untergebracht.
Fig. 1E zeigt die in Fig. 1D dargestellte Kabelaufrollvorrichtung 1 mit voll eingezogenen Ohrhörern 14, 15 und Klinkenstecker 9 um 90° gedreht von oben. Insbesondere sind hierbei der voll eingezogene Klinkenstecker 9 in dem zweiten Aufnahmeschacht 7 zu erkennen. Fig. 1F zeigt dieselbe Kabelaufrollvorrichtung 1 wie in Fig. 1E, jedoch in einer um weitere 90° gedrehten Perspektive.

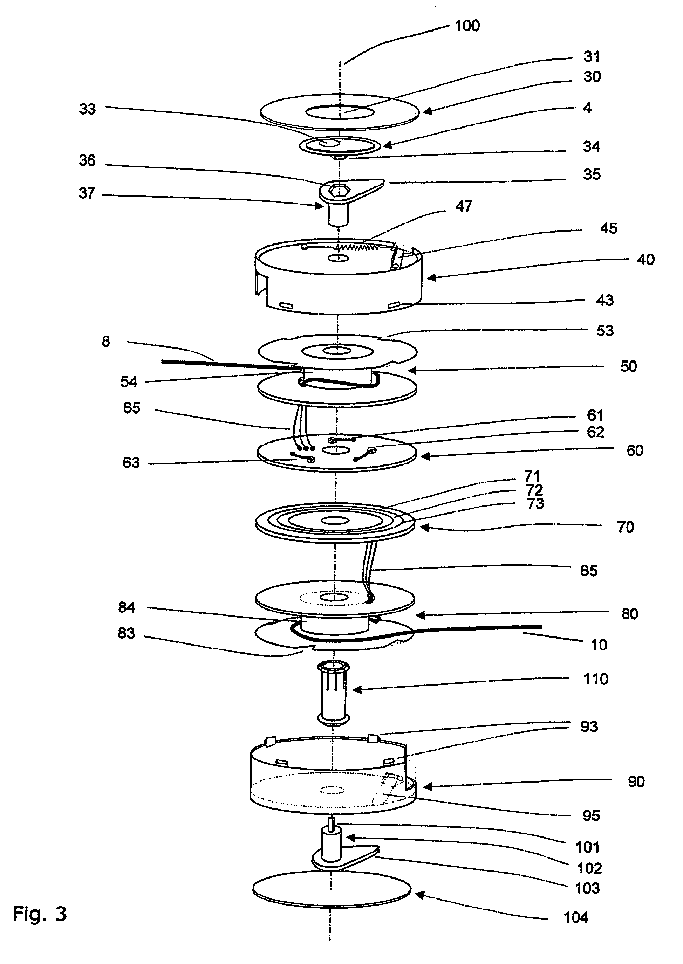

Die Kabelaufrollvorrichtung 1, wie in den Figuren 1 - 1F dargestellt, setzt sich im Wesentlichen aus dem inneren Kabelaufrollmechanismus 2 und einer ersten Gehäuseschale 16 und einer zweiten Gehäuseschale 17 zusammen, wie in Fig. 3 als Explosionszeichnung skizziert. Die Gehäuseschalen 16, 17 sind so gestaltet, dass der Kabelaufrollmechanismus 2 passgenau darin aufgenommen wird. Dabei können die Gehäuseschalen 16, 17 je nach Kunde ein verschiedenes Design aufweisen, so lange innen der Kabelaufrollmechanismus 2 passgenau integriert werden kann. So können der Kabelaufrollmechanismus 2 als ein mechanisch komplexes aber konstantes Teil und die Gehäuseschalen 16, 17 als kundenspezifische design-mäßig leicht variable Teile ausgelegt sein. Die Aufnahmeschächte 6 und 7 können so mit geringem Aufwand an die Ohrhörer- und an die Klinkenstecker-Geometrie angepasst werden.

Der Kabelaufrollmechanismus 2 als mechanisches Herzstück ist in Fig. 3 dargestellt und weist die zwei Kabeltrommeln 50 und 80 auf, die im Wesentlichen voneinander unabhängig sind, mit jeweils einem ersten und zweiten Gehäuseteil 40, 90 und jeweils einer Arretiervorrichtung, die im Wesentlichen aus einem ersten bzw. zweiten Arretierbügel 45, 95 besteht, auf. Die zwei Gehäuseteile 40, 90 weisen jeweilige Abdeckungen 30 bzw. 104 auf und sind über Rastnasenaufnahmen 43 des ersten Gehäuseteils 40 sowie Rastnasen 93 des zweiten Gehäuseteils 90 miteinander verbindbar. Die erste Kabeltrommel 50 nimmt das erste Stereo-Kabel 8 mit Klinkenstecker 9 auf, die zweite Kabeltrommel 80 nimmt das zweite Stereo-Kabel 10 mit angeschlossenen Ohrhörern 14, 15 auf. Die Kabeltrommeln 50 und 80 sind um eine gemeinsame Drehachse 100 leicht drehbar gelagert. Die Stereo-Kabel 8, 10 werden von der jeweiligen rotierenden Kabeltrommel 50, 80 auf- bzw. abgewickelt und stehen in elektrischem Kontakt mit einer mit der jeweiligen Kabeltrommel 50, 80 mit einer ersten bzw. zweiten rotierenden Kontaktleiterplatte 60, 70. Die auf der gleichen Drehachse 100 aber unabhängig voneinander rotierenden Kontaktleiterplatten 60, 70 sind elektrisch miteinander über drei auf der ersten Kontaktleiterplatte 60 angeordnete, federnde Schleifkontakte 61, 62, 63 und drei auf der zweiten Kontaktleiterplatte 70 angeordnete, rotationssymmetrische Kontaktschleifbahnen 71, 72, 73 verbunden.

Auf diese Weise wird die elektrische Verbindung vom Klinkenstecker 9 (Fig. 1) über das erste Stereo-Kabel 8 bzw. seine Anschlusslitzen 65, über die erste Kontaktleiterplatte 60 mit den federnden Schleifkontakten 61, 62, 63 über die angrenzende zweite Kontaktleiterplatte 70 mit den Kontaktschleifbahnen 71, 72, 73 über die Anschlusslitzen 85 des zweiten Stereo-Kabels 10 bzw. das zweite Stereo-Kabel 10 mit den Ohrhörern 14, 15 (Fig. 1) verbunden.

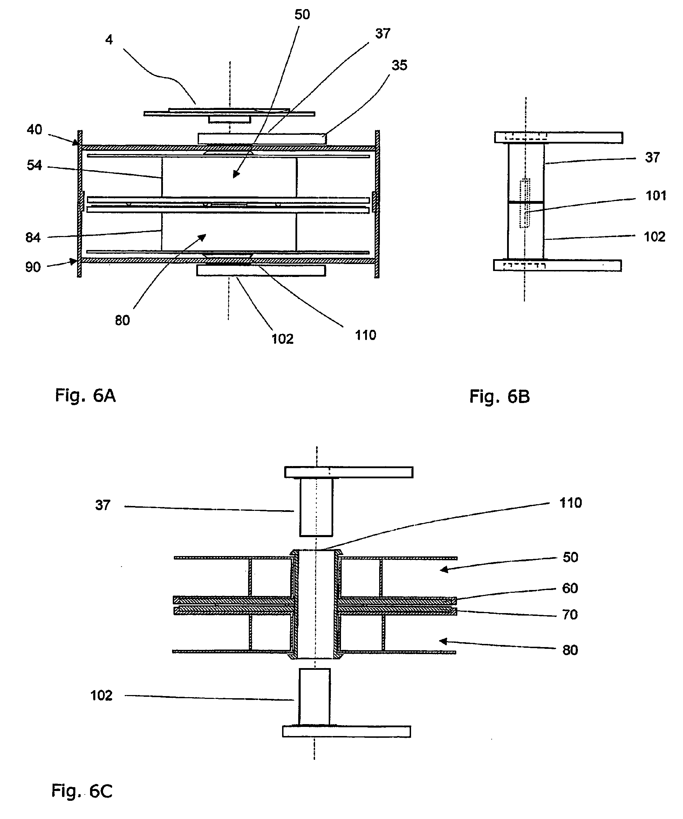

Die zwei Kabeltrommeln 50 und 80 mit ihren jeweiligen Kontaktleiterplatten 60 und 70 sind leicht drehbar gelagert und werden abstandsmäßig zueinander durch ein zylindrisches Kabeltrommelverbindungselement 110 gehalten, so dass der Abstand der Kabeltrommeln 50, 80 und damit der Abstand der Kontaktleiterplatten 60, 70 sichergestellt ist, so dass eine sichere Kontaktierung zwischen den Schleifkontakten 61, 62, 63 und den Kontaktschleifbahnen 71, 72, 73 gewährleistet ist. Die Länge des zylindrischen Kabeltrommelverbindungselements 110, die Höhe der Kabeltrommeln 50, 80 und der Kontaktleiterplatten 60, 70 bestimmen den Abstand der Kontaktleiterplatten 60, 70 zueinander (Fig. 2, Fig. 6).

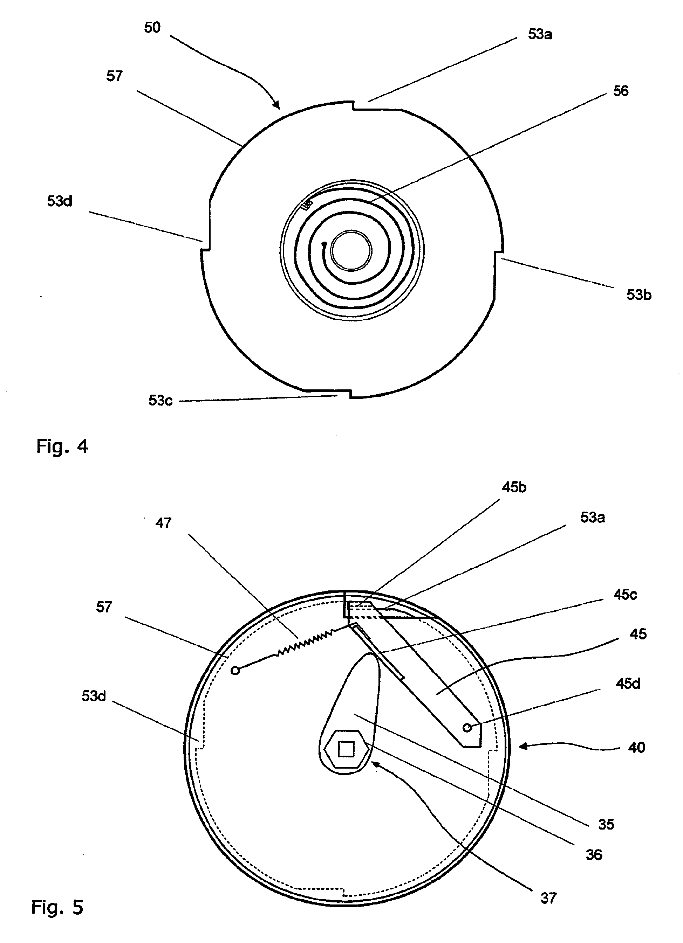

Damit beim Ausziehen beispielsweise des ersten Stereo-Kabels 8 eine rücktreibene Kraft zum späteren Wiedereinziehen des ersten Stereo-Kabels 8 entsteht, ist im Inneren des Wickelkörpers 54 der ersten Kabeltrommel 50 eine Spiralfeder 56 integriert (Fig. 4), die beim Drehen der ersten Kabeltrommel 50 gegen den Uhrzeigersinn gespannt wird. Analog ist auch eine nicht gezeigte Spiralfeder im Inneren des Wickelkörpers 84 der zweiten Kabeltrommel 80 integriert, die beim Drehen der zweiten Kabeltrommel 80 gegen den Uhrzeigersinn gespannt wird. Das sofortige Wiederaufspulen des ersten Stereo-Kabels 8 bzw. das Zurückdrehen der so durch die Federkraft der Spiralfeder 56 angetriebenen ersten Kabeltrommel 50 wird durch einen Arretiermechanismus verhindert, so dass ein ausgezogenes Kabel zunächst einmal in dieser Ausziehposition verbleibt. Dieser Arretiermechanismus wird im Wesentlichen durch sägezahnförmige Ausbuchtungen 53 in Fig. 3 sowie 53a, 53b, 53c, 53d in Fig. 4 an der ersten Kabeltrommel 50 und einen bügelförmigen Rasthaken 45b am ersten Gehäuseteil 40 (Fig. 5) bewirkt, der als Teil des ersten Arretierbügels 45 verhindert, dass sich die erste Kabeltrommel 50 zurückdrehen kann. Der erste Arretierbügel 45 ist einerseits um einen Drehpunkt 45d drehbar am ersten Gehäuse 40 befestigt, andererseits wird er durch eine mit dem ersten Gehäuse 40 verbundene Feder 47 leicht in Richtung der ersten Kabeltrommel 50 gezogen, so dass der bügelförmige Rasthaken 45b stets an einem Kabeltrommelrand 57 der ersten Kabeltrommel 50 schleift. Die Kabeltrommel 50 kann sich mit dem an ihrem Kabeltrommelrand 57 schleifenden bügelförmigen Rasthaken 45b gegen den Uhrzeigersinn rotierend bewegen, jedoch bei im Uhrzeigersinn drehender erster Kabeltrommel 50 wird der bügelförmige Rasthaken 45b in eine ihrer sägezahnförmigen Ausbuchtungen 53a-53d einrasten und die erste Kabeltrommel 50 anhalten. Dieser Arretiermechanismus bewirkt, dass das erste Stereo-Kabel 8, das auf der ersten Kabeltrommel 50 aufgewickelt ist und manuell entgegen der Federkraft der Spiralfeder 56 (Fig. 4) aus dem Kabelaufrollmechanismus 2 herausgezogen wird, in fast dieser Ausziehstellung verbleibt, abzüglich einer kleinen Wiedereinziehung des ersten Stereo-Kabels 8, bis nämlich der erste Arretierbügel 45 beim federgetriebenen Zurückdrehen der ersten Kabeltrommel 50 in die nächst kommende sägezahnförmige Ausbuchtung 53 eben der ersten Kabeltrommel 50 einrastet. Die Anzahl der sägezahnförmigen Ausbuchtungen 53a-53d ist nicht, wie hier in einer beispielhaften Ausführungsform gezeigt, auf vier Ausbuchtungen begrenzt, sondern es ist auch erfindungsgemäß denkbar, dass je nach Anwendungsfall, Umfang der Kabeltrommeln und gewünschter Rastauflösung bzw. Genauigkeit der Verriegelungsposition beliebig viele Ausbuchtungen vorgesehen werden können.

Die zweite Kabeltrommel 80 ist mit dem identischen aber gespiegelten Arretiermechanismus wie bei der ersten Kabeltrommel 50 versehen, im Wesentlichen bestehend aus dem drehbar gelagerten zweiten Arretierbügel 95, der mit seinem Rasthaken in die sägezahnartigen Ausbuchtungen 83 der zweiten Kabeltrommel 80 eingreifen kann. Das Herausziehen des zweiten Stereo-Kabels 10 von der zweiten Kabeltrommel 80 und das Verbleiben des zweiten Stereo-Kabels 10 in dieser Ausziehstellung erfolgt wie bei der ersten Kabeltrommel 50.

Ein Lösen der Arretierung der ersten Kabeltrommel 50 erfolgt, indem ein erster Entriegelungshebel 37 mit einer Entriegelungsnase 35 durch rotatorische Drehung um die Drehachse 100 gegen den Anschlagbügel 45c des ersten Arretierbügels 45 drückt und somit den ersten Arretierbügel 45 soweit um den Drehpunkt 45d verdreht, bis der bügelförmige Rasthaken 45b aus den sägezahnförmigen Ausbuchtungen 53a bis 53d der ersten Kabeltrommel 50 herausgedreht ist und dadurch die Drehung der ersten Kabeltrommel 50 auch im Uhrzeigersinn wieder freigibt. Die Feder 47, die als Spiral- oder Biegefeder ausgebildet sein kann, bewirkt ein Zurückziehen des ersten Arretierbügels 45 und damit ein automatisches Zurückdrehen des ersten Entriegelungshebels 37. Die Drehung des ersten Entriegelungshebels 37 wird von außen durch das Entriegelungsrad 4 bewirkt, das über einen Sechskantfortsatz 34 (Fig. 3) in rotatorisch kraftschlüssiger Verbindung mit einer Sechskanteinbuchtung 36 des ersten Entriegelungshebels 37 steht. Die skizzierte sechskantartige Kraftübertragungsverbindung des Sechskantfortsatzes 34 und der Sechskanteinbuchtung 36 kann auch andersartig gestaltet sein. Das Entriegelungsrad 4 ist durch einen Durchbruch 31 in der Abdeckung 30 des ersten Gehäuseteils 40 zugänglich.

Das Lösen des Arretiermechanismus der ersten Kabeltrommel 50, bestehend aus den sägezahnförmigen Ausbuchtungen 53 an der ersten Kabeltrommel 50 und dem bügelförmigen Rasthaken 45b, erfolgt durch rotatorische Verdrehung des ersten Entriegelungshebel 35 gegen den Arretierbügel 45 (und im Uhrzeigersinn der Draufsicht der Fig. 5), so dass der bügelförmige Rasthaken 45b nach außen gedrückt wird und den Rücklauf der ersten Kabeltrommel 50, der durch die Spiralfeder 56 verursacht ist, freigibt. Die für eine Entriegelung notwendige rotatorische Drehung der Entriegelungsnase 35, die Teil des ersten Entriegelungshebels 37 ist, wird durch ein von außen zugängliches, zu bedienendes Entriegelungsrad 4 bewirkt, das über die sechskantartige Kraftübertragungsverbindung des Sechskantfortsatzes 34 und der Sechskanteinbuchtung 36 mit dem ersten Entriegelungshebel 37 verbunden ist.

Das Lösen des Arretiermechanismus der zweiten Kabeltrommel 80, der gleich dem Arretiermechanismus der ersten Kabeltrommel 50 ausgeführt ist und im Wesentlichen aus den sägezahnförmigen Ausbuchtungen 83 (Fig. 3) der zweiten Kabeltrommel 80 in Verbindung mit dem Arretierbügel 95 am Gehäuse 90 besteht, erfolgt analog zum Arretiermechanismus der ersten Kabeltrommel 50 durch rotatorische Verdrehung eines zweiten Entriegelungshebels 102 mit seiner Entriegelungsnase 103 gegen den zweiten Arretierbügel 95, so dass dessen (nicht gezeigter) Rasthaken ebenso nach außen gedrückt wird und den Rücklauf der zweiten Kabeltrommel 80 freigibt.

Der zweite Entriegelungshebel 102 (Fig. 6B) ist über ein rotatorisch kraftschlüssiges Übertragungselement 101 mit dem ersten Entriegelungshebel 37 verbunden, so dass durch das von außen zugängliche Entriegelungsrad 4 gleichzeitig der erste Entriegelungshebel 37 und der zweite Entriegelungshebel 102 gedreht wird. Somit werden in einer Ausführungsform der Erfindung gleichzeitig beide Arretierungen der ersten und der zweiten Kabeltrommel 40, 80 gelöst.

Die Entriegelungshebel 37 und 102 können an der gemeinsamen Drehachse 100 dem Winkel nach ausgerichtet sein, so dass, wie vorstehend geschildert, beide Arretierungen der ersten und der zweiten Kabeltrommel 40, 80 gleichzeitig gelöst werden. Es ist jedoch erfindungsgemäß auch denkbar, dass die Entriegelungshebel 37 und 102 an der gemeinsamen Drehachse 100 dem Winkel nach versetzt sind, so dass die Arretierungen der ersten und der zweiten Kabeltrommel 40, 80 zeitversetzt gelöst werden.

Darüber hinaus ist es auch denkbar, das ein weiteres Entriegelungsrad bereitgestellt wird, das unabhängig vom Entriegelungsrad 4 drehbar ist. Dies kann an einer Stelle erfolgen, die der Position des Entriegelungsrads der Fig. 6A gegenüberliegt, und zwar an der Seite des Bodens des zweiten Gehäuseteils 90. Durch die Bereitstellung des weiteren, vom Entriegelungsrad 4 unabhängig drehbaren Entriegelungsrads und durch die Entkopplung der Drehbewegung des ersten Entriegelungshebels 37 von der Drehbewegung des zweiten Entriegelungshebels 102, können die jeweiligen Entriegelungshebel 37, 102 vorteilhaft von einem entsprechenden Entriegelungshebel betätigt werden, so dass eine völlig unabhängige Auslösung der Arretierungen ermöglicht wird.

Die zuletzt beschriebene Ausführungsform mit zwei Entriegelungsrädern, wobei ein erstes Entriegelungsrad operativ mit dem ersten Entriegelungshebel 37 verbunden ist und wobei ein zweites Entriegelungsrad operativ mit dem zweiten Entriegelungshebel 102 verbunden ist, so dass der erste Entriegelungshebel 37 unabhängig vom zweiten Entriegelungshebel 102 durch das jeweilige Entriegelungsrad betätigbar ist, ist zwar vorliegend nicht Gegenstand der Ansprüche, weist aber ebenso wie die zuvor beschriebenen Ausführungsformen mit gemeinsamer (d.h. gleichzeitiger oder zeitversetzter) Auslösung die konstruktive Besonderheit und Einfachheit auf, dass der Entriegelungsmechanismus entweder ein manuell zu betätigendes Entriegelungsrad oder zwei getrennte manuell zu betätigende Entriegelungsräder umfasst, das bzw. die operativ mit zwei Entriegelungshebeln verbunden ist bzw. sind, die jeweils an einem der beiden Arretiermechanismen angreifen, um die entsprechende Arretierung zu lösen.

Wenn technische Merkmale in den Ansprüchen mit Bezugszeichen versehen sind, so sind diese Bezugszeichen lediglich zum besseren Verständnis der Ansprüche vorhanden und dementsprechend stellen solche Bezugszeichen keine Einschränkungen des Schutzumfangs solcher Elemente dar, die nur exemplarisch durch solche Bezugszeichen gekennzeichnet sind.

### Bezugszeichenliste

- 1: Kabelaufrollvorrichtung
- 2: Kabelaufrollmechanismus
- 4: Entriegelungsrad
- 6: erster Aufnahmeschacht
- 7: zweiter Aufnahmeschacht
- 8: erstes Stereo-Kabel
- 9: Klinkenstecker
- 10: zweites Stereo-Kabel
- 11: Verbindung
- 12, 13: Mono-Kabel
- 14, 15: Ohrhörer
- 16: erste Gehäuseschale
- 17: zweite Gehäuseschale
- 30: Abdeckung des ersten Gehäuseteils 40
- 31: Durchbruch der Abdeckung 30 des ersten Gehäuseteils 40
- 33: Drehhilfe
- 34: Sechskantfortsatz
- 35: Entriegelungsnase des ersten Entriegelungshebels 37
- 36: Sechskanteinbuchtung des ersten Entriegelungshebels 37
- 37: erster Entriegelungshebel 37
- 40: erstes Gehäuseteil
- 43: Rastnasenaufnahmen des ersten Gehäuseteils 40
- 45: erster Arretierbügel
- 45b: Rasthaken
- 45c: Anschlagbügel
- 45d: Drehpunkt des ersten Arretierbügels 45
- 47: Feder des ersten Gehäuses 40
- 50: erste Kabeltrommel

- 53,53a,53b,53c,53d: sägezahnförmige Ausbuchtungen der ersten Kabeltrommel 50
- 54: Wickelkörper der ersten Kabeltrommel 50
- 56: Spiralfeder
- 57: Kabeltrommelrand der ersten Kabeltrommel 50
- 60: erste rotierende Kontaktleiterplatte
- 61, 62, 63: federnde Schleifkontakte
- 65: Anschlusslitzen 65 des ersten Stereo-Kabels 8
- 70: zweite rotierende Kontaktleiterplatte
- 71, 72, 73: rotationssymmetrische Kontaktschleifbahnen
- 80: zweite Kabeltrommel
- 83: sägezahnförmige Ausbuchtungen der zweiten Kabeltrommel 50
- 84: Wickelkörper der zweiten Kabeltrommel 80
- 85: Anschlusslitzen des zweiten Stereo-Kabels 10
- 90: zweites Gehäuseteil
- 93: Rastnasen des zweiten Gehäuseteils 90
- 95: zweiter Arretierbügel
- 100: gemeinsame Drehachse der Kabeltrommeln 50, 80
- 101: rotatorisch kraftschlüssiges Übertragungselement
- 102: zweiter Entriegelungshebel
- 103: Entriegelungsnase des zweiten Entriegelungshebels 102
- 104: Abdeckung des zweiten Gehäuseteils 90
- 110: zylindrisches Kabeltrommelverbindungselement

## Patentansprüche

1. Vorrichtung zum Ab- und Aufrollen von Kabeln, insbesondere eine Kabelaufrollvorrichtung für eine Ohrhörerkabelverbindung, umfassend eine in einem ersten Gehäuseteil (40) drehbar gelagerte erste Kabeltrommel (50), auf der ein erstes Kabel (8) aufgewickelt und arretiert werden kann, und eine in einem zweiten Gehäuseteil (90) drehbar gelagerte zweite Kabeltrommel (80), auf der ein zweites Kabel (10) aufgewickelt und arretiert werden kann,
wobei auf der ersten und zweiten Kabeltrommel (50, 80) elektrische Kontakte vorhanden sind, um einen elektrischen Kontakt zwischen dem ersten und zweiten Kabel (8, 10) herzustellen, und
wobei die erste und die zweite Kabeltrommel (50, 80) jeweils ein Mittel (56) zum rotatorischen Zurückdrehen der jeweiligen Kabeltrommel (50, 80) in eine Ausgangslage im jeweiligen Gehäuseteil (40, 90) und damit zum Aufwickeln des jeweiligen Kabels (8, 10) besitzt,
wobei die erste und die zweite Kabeltrommel (50, 80) jeweils einen voneinander unabhängigen Arretiermechanismus besitzt, der die jeweilige Kabeltrommel (50, 80) frei in eine Kabelabrollrichtung im jeweiligen Gehäuseteil (40, 90) rotieren lässt oder in einer bestimmten Position im jeweiligen Gehäuseteil (40, 90) arretiert,
und wobei ein manuell zu betätigender Entriegelungsmechanismus zum Lösen der Arretierungen vorgesehen ist,
**dadurch gekennzeichnet, dass**
der Entriegelungsmechanismus dafür eingerichtet ist, beide Arretiermechanismen gemeinsam zu lösen.

2. Vorrichtung nach Anspruch 1, wobei der Entriegelungsmechanismus ein manuell zu betätigendes Entriegelungsrad (4) umfasst, das operativ mit einem ersten Entriegelungshebel (37) verbunden ist, das am ersten Gehäuseteil (40) drehbar gelagert ist, und das operativ mit einem zweiten Entriegelungshebel (102) verbunden ist, das am zweiten Gehäuseteil (90) drehbar gelagert ist, wobei die ersten und zweiten Entriegelungshebel (37, 102) gestaltet sind, jeweils einen der beiden Arretiermechanismen zu betätigen.

3. Vorrichtung nach Anspruch 1 oder 2, wobei das jeweilige Mittel (56) zum rotatorischen Zurückdrehen eine Spiralfeder (56) als Energiespeicher umfasst.

4. Vorrichtung nach einem oder mehreren der vorangehenden Ansprüche, wobei der jeweilige Arretiermechanismus der ersten und der zweiten Kabeltrommel (50, 80) durch sägezahnartige Ausbuchtungen (53) an der ersten Kabeltrommel (50) bzw. sägezahnartige Ausbuchtungen (83) an der zweiten Kabeltrommel (80) ausgebildet ist, und wobei das erste Gehäuseteil (40) einen ersten Arretierbügel (45) umfasst, der mit einer der sägezahnartigen Ausbuchtungen (53) der ersten Kabeltrommel (50) verriegelbar ist und wobei das zweite Gehäuseteil (90) einen zweiten Arretierbügel (95) umfasst, der mit einer der sägezahnartigen Ausbuchtungen (83) der zweiten Kabeltrommel (80) verriegelbar ist.

5. Vorrichtung nach Anspruch 4, wobei der erste Arretierbügel (45) einen bügelförmigen Rasthaken (45b) aufweist und in Richtung des Kabeltrommelrandes (57) der ersten Kabeltrommel (50) gezogen wird, so dass der bügelförmige Rasthaken (45b) stets am Kabekrommelrand (57) der ersten Kabeltrommel (50) schleift, wobei
der bügelförmige Rasthaken (45b) in eine der sägezahnartigen Ausbuchtungen (53) an der ersten Kabeltrommel (50) einrastet und die erste Kabeltrommel (50) verriegelt, sobald sich die erste Kabeltrommel (50) in einer ersten Richtung dreht, und wobei
der bügelförmige Rasthaken (45b) über die sägezahnartigen Ausbuchtungen (53) an der ersten Kabeltrommel (50) und aus diesen hinaus gleitet, so dass die erste Kabeltrommel (50) freigegeben wird, sobald sich die erste Kabeltrommel (50) in einer zweiten, der ersten entgegengesetzten Richtung dreht.

6. Vorrichtung nach Anspruch 5, wobei der bügelförmige Rasthaken (45b) durch eine mit dem ersten Gehäuseteil (40) verbundene Feder (47) in Richtung des Kabeltrommelrandes (57) der ersten Kabeltrommel (50) gezogen wird.

7. Vorrichtung nach Anspruch 2 und nach einem der Ansprüche 4 bis 6, wobei eine jeweilige Entriegelungsnase (35) des ersten bzw. zweiten Entriegelungshebels (37, 102) gegen einen jeweiligen der Arretierbügel (45, 95) betätigbar ist, um den jeweiligen Arretierbügel (45, 95) aus der Verriegelung mit einer der sägezahnartigen Ausbuchtungen (53, 83) an der ersten bzw. zweiten Kabeltrommel (50, 80) zu drücken.

8. Vorrichtung nach einem oder mehreren der vorangehenden Ansprüche, weiterhin umfassend einen ersten Aufnahmeschacht (6) zur Aufnahme von Ohrhörern (14, 15) des zweiten Stereo-Kabels (10), der die Ohrhörer (14, 15) beim völligen Einziehen des zweiten Stereo-Kabels (10) schützend umgibt.

9. Vorrichtung nach einem oder mehreren der vorangehenden Ansprüche, weiterhin umfassend einen zweiten Aufnahmeschacht (7) zur Aufnahme eines Klinkensteckers (9) des ersten Stereo-Kabels (8), der den Klinkensteckers (9) beim völligen Einziehen des ersten Stereo-Kabels (8) schützend umgibt.

10. Vorrichtung nach einem oder mehreren der vorangehenden Ansprüche, wobei das zweite Stereo-Kabel (10) auch teils aus zwei parallel laufenden Mono-Kopfhörerkabeln besteht.

## Claims

1. Device for the coiling and uncoiling of cables, in particular a cable coiling device for an earphone cable connection, comprising a first cable drum (50) stored rotatably in a first housing part (40), on which a first cable (8) can be coiled up and arrested, and a second cable drum (80) stored rotatably in a second housing part (90), on which a second cable (10) can be coiled up and arrested,
where electrical contacts are present on the first and second cable drums (50, 80) for producing an electrical contact between the first and the second cable (8, 10), and
where the first and the second cable drum (50, 80) each have a means (56) for rotating the respective cable drum (50, 80) back into a starting position in the respective housing part (40, 90) and thus for coiling up the respective cable (8, 10),
the first and the second cable drum (50, 80) each having a mutually independent arresting mechanism which lets the respective cable drum (50, 80) rotate freely in a cable uncoiling direction in the respective housing part (40, 90) or arrests it in a specific position in the respective housing part (40, 90),
and an unlocking mechanism to be operated manually for releasing the locks being provided,
**characterized in that**
the unlocking mechanism is designed for releasing both arresting mechanisms together.

2. Device according to Claim 1, where the unlocking mechanism comprises an unlocking wheel (4) to be operated manually which is operatively connected to an unlocking lever (37), which is supported rotatably at a first housing part (40) and which is operatively connected to a second unlocking lever (102), which is supported rotatably at the second housing part (90), the first and second unlocking levers (37, 102) being adapted to operate one of the two arresting mechanisms each.

3. Device according to Claim 1 or 2, where the respective means (56) for rotating back comprises a flat spiral spring (56) as an energy storage.

4. Device according to one or more of the preceding claims, where the respective arresting mechanism of the first and the second cable drum (50, 80) is formed by indentations (53) in the form of saw teeth in the first cable drum (50) and indentations (83) in the form of saw teeth in the second cable drum (80), respectively, and where the first housing part (40) comprises a first locking bracket (45) which can be interlocked with one of the indentations (53) in the form of saw teeth of the first cable drum (50) and where the second housing part (90) comprises a second locking bracket (95) which can be interlocked with one of the indentations (83) in the form of saw teeth of the second cable drum (80).

5. Device according to Claim 4, where the first locking bracket (45) has a bracket-shaped snap hook (45b) and is pulled in the direction of the cable-drum edge (57) of the first cable drum (50) such that the bracket-shaped snap hook (45b) always slides on the cable-drum edge (57) of the first cable drum (50), where
the bracket-shaped snap hook (45b) engages one of the indentations (53) in the form of saw teeth in the first cable drum (50) and blocks the first cable drum (50) as soon as the first cable drum (50) rotates in a first direction, and where
the bracket-shaped snap hook (45b) slides over the indentations (53) in the form of saw teeth in the first cable drum (50) and out of them so that the first cable drum (50) is released as soon as the first cable drum (50) rotates in a second direction opposite to the first one.

6. Device according to Claim 5, where the bracket-shaped snap hook (45b) is pulled by a spring (47) connected to the first housing part (40) in the direction of the cable-drum edge (57) of the first cable drum (50).

7. Device according to Claim 2 and according to one of Claims 4 through 6, where a respective unlocking lug (35) of the first and the second unlocking lever (37, 102), respectively, can be operated against a respective one of the locking bracket (45, 95) so as to press the respective locking bracket (45, 95) out of the interlocking with one of the indentations in the form of saw teeth (53, 83) at the first or the second cable drum (50, 80), respectively.

8. Device according to one or more of the preceding claims, further comprising a first accommodation shaft (6) for accommodating earphones (14, 15) of the second stereo cable (10) which protectively encloses the earphones (14, 15) when the second stereo cable (10) is wound up completely.

9. Device according to one or more of the preceding claims, further comprising a second accommodation shaft (7) for accommodating a jack plug (9) of the first stereo cable (8) which protectively surrounds the jack plug (9) when the first stereo cable (8) is wound up completely.

10. Device according to one or more of the preceding claims, where the second stereo cable (10) also partly consists of two mono earphone cables extending in parallel.

## Revendications

1. Dispositif d'enroulement et de déroulement de câbles, en particulier dispositif d'enroulement de câble pour connexion de câbles d'écouteurs, comprenant un premier tambour de câble (50) s'appuyant en rotation dans une première pièce du boîtier (40) et sur lequel un premier câble (8) peut être enroulé et bloqué et un second tambour de câble (80) s'appuyant en rotation dans une seconde pièce du boîtier (90) et sur lequel un second câble (10) peut être enroulé et bloqué,
étant prévus, sur le premier et le second tambours de câble (50, 80), des contacts électriques permettant d'établir un contact électrique entre le premier et le second câble (8, 10), et
les premier et le second tambours de câble (50, 80) comportant respectivement un moyen (56) permettant de réinitialiser par rotation le tambour de câble respectif (50, 80) dans une position initiale dans la pièce du boîtier respective (40, 90) et ainsi d'enrouler le câble respectif (8, 10),
le premier et le second tambours de câble (50, 80) comportant respectivement un mécanisme de blocage indépendant de celui de l'autre et qui fait tourner le tambour de câble respectif (50, 80) librement dans un sens de déroulement de câble dans la pièce du boîtier respective (40, 90) ou le bloque dans une certaine position dans la pièce du boîtier respective (40, 90),
et étant prévu un mécanisme de déverrouillage s'actionnant manuellement pour suspendre les blocages,
**caractérisé en ce que**
le mécanisme de déverrouillage est conçu pour débloquer les deux mécanismes de blocage ensemble.

2. Dispositif selon la revendication 1, dans lequel le mécanisme de déverrouillage comprend une roue de déverrouillage (4) s'actionnant manuellement qui est reliée au niveau opératoire à un premier levier de déverrouillage (37) qui s'appuie en rotation dans la première pièce du boîtier (40) et est relié au niveau opératoire à un second levier de déverrouillage (102) qui s'appuie en rotation dans la seconde pièce du boîtier (90), les premier et second leviers de déverrouillage (37, 102) étant conçus pour actionner chacun un des deux mécanismes de blocage.

3. Dispositif selon la revendication 1 ou 2, dans lequel le moyen respectif (56) de réinitialisation par rotation comprend un ressort hélicoïdal (56) faisant office d'accumulateur d'énergie.

4. Dispositif selon une ou plusieurs des revendications précédentes, dans lequel le mécanisme de blocage respectif des premier et second tambours de câble (50, 80) est constitué par des échancrures en dents de scie (53) pratiquées sur le premier tambour de câble (50) ou des échancrures en dents de scie (83) pratiquées sur le second tambour de câble (80), la première pièce du boîtier (40) comprenant une première bride de blocage (45) qui peut être verrouillée avec une des échancrures (53) en dents de scie du premier tambour de câble (50) et la seconde pièce du boîtier (90) comprenant une seconde bride de blocage (95) qui peut être verrouillée avec une des échancrures (83) en dents de scie du second tambour de câble (80).

5. Dispositif selon la revendication 4, dans lequel la première bride de blocage (45) présente un crochet d'enclenchement en forme de bride (45b) et est tirée en direction du bord du tambour de câble (57) du premier tambour de câble (50) de manière à ce que le crochet d'enclenchement en forme de bride (45b) frotte en permanence contre le bord de tambour de câble (57) du premier tambour de câble (50),
le crochet d'enclenchement en forme de bride (45b) s'enclenchant dans une des échancrures en dents de scie (53) du premier tambour de câble (50) et bloquant le premier tambour de câble (50) dès que le premier tambour de câble (50) se tourne dans une première direction, et
le crochet d'enclenchement en forme de bride (45b) glissant au-dessus des échancrures en dents de scie (53) du premier tambour de câble (50) et au-delà de celles-ci de manière à libérer le premier tambour de câble (50) dès que le premier tambour de câble (50) tourne dans une seconde direction opposée à la première.

6. Dispositif selon la revendication 5, dans lequel le crochet d'enclenchement en forme de bride (45b) est tiré par un ressort (47) relié à la première pièce du boîtier (40) en direction du bord du tambour de câble (57) du premier tambour de câble (50).

7. Dispositif selon la revendication 2 et selon une des revendications 4 à 6, dans lequel un bec de déverrouillage respectif (35) du premier ou second levier de déverrouillage (37, 102) peut être actionné contre une des brides de verrouillage (45, 95) respectives pour faire sortir la bride de verrouillage respective (45, 95) de son verrouillage avec une des échancrures en dents de scie (53, 83) pratiquées sur le premier ou second tambour de câble (50, 80).

8. Dispositif selon une ou plusieurs des revendications précédentes, comprenant en outre une première colonne réceptrice (6) destinée à recevoir des écouteurs (14, 15) du second câble stéréo (10) qui entoure les écouteurs (14, 15) en les protégeant lorsque le second câble stéréo (10) est totalement rentré.

9. Dispositif selon une ou plusieurs des revendications précédentes, comprenant en outre une seconde colonne réceptrice (7) destinée à recevoir un connecteur (9) du premier câble stéréo (8) qui entoure en le protégeant le connecteur (9) lorsque le premier câble stéréo (8) est totalement rentré.

10. Dispositif selon une ou plusieurs des revendications précédentes, dans lequel le second câble stéréo (10) consiste aussi partiellement en deux câbles de mono-écouteurs orientés parallèlement.
